# EUROPÄISCHE PATENTSCHRIFT

(11) **EP 1 261 547 B1**
(45) Veröffentlichungstag und Bekanntmachung des Hinweises auf die Patenterteilung: **24.03.2004**
(21) Anmeldenummer: 01900401.9
(22) Anmeldetag: 09.01.2001
(51) Int. Cl.: C01B 21/26, B01J 29/06, B01D 53/86

(54) **BESEITIGUNG VON LACHGAS BEI DER SALPETERSÄUREPRODUKTION**
REMOVAL OF LAUGHING GAS IN NITRIC ACID PRODUCTION
ELIMINATION DE GAZ HILARANT LORS DE LA PRODUCTION D'ACIDE NITRIQUE

(30) Priorität: 14.01.2000 DE 10001540
(43) Veröffentlichungstag der Anmeldung: 04.12.2002
(73) Patentinhaber: Uhde GmbH, 44141 Dortmund (DE)
(72) Erfinder: SCHWEFER, Meinhard, 44141 Dortmund (DE); MAURER, Rainer, 58332 Schwelm (DE); TUREK, Thomas, 40239 Düsseldorf (DE)
(74) Vertreter: Ackermann, Joachim, Dr.
(86) Internationale Anmeldenummer: PCT/EP2001/000158
(87) Internationale Veröffentlichungsnummer: WO 2001/051415

(56) Entgegenhaltungen:
- EP-A- 0 756 891
- WO-A-99/49954
- DE-A- 19 805 202
- US-A- 4 305 919
- US-A- 5 178 101

## Beschreibung

Bei der Ammoniakoxidation im Verlaufe der Salpetersäureproduktion entsteht neben dem gewünschten Stickstoffmonoxid NO auch das unerwünschte Lachgas N₂O. Dieses trägt in nicht unerheblichem Maße zum Abbau von stratosphärischem Ozon und zum Treibhauseffekt bei. Nach Reduzierung der Lachgasemissionen der Adipinsäureindustrie stellt die Salpetersäureproduktion die größte Quelle industrieller Lachgasemissionen dar. Es besteht daher aus Gründen des Umweltschutzes ein dringender Bedarf an technischen Lösungen, die Lachgasemissionen bei der Salpetersäureproduktion zu reduzieren. Eine Übersicht über den Ablauf der Salpetersäureproduktion und deren verschiedene Verfahrensvarianten ist in Ullmann's Encyclopedia of Industrial Chemistry; Vol. A 17, VCH Weinheim (1991) gegeben.

Eine aussichtsreiche Möglichkeit zur Entfernung von N₂O aus industriellen Abgasen besteht in der Zersetzung von N₂O in die Elemente Stickstoff und Sauerstoff mit Hilfe eines geeigneten Katalysators.

Zur Beseitigung von N₂O bei der HNO₃-Produktion existieren zahlreiche Vorschläge, welche zumeist auf einen katalytischen Abbau des N₂O zwischen den Pt-Netzen und den ersten Wärmetauschern basieren.

So beschreibt US-A-4,973,457 ein Verfahren zur Beseitigung von Distickstoffoxid, welches während der NH₃-Verbrennung gebildet wird, durch Retention der Gase für 0,1 bis 3 Sekunden bevor diese abgekühlt werden. Nach dem hier beschriebenen Verfahren soll bis zu 90% N₂O in N₂ und O₂ zersetzt werden. Alternativ wird angegeben, daß die Gase zur selektiven Zersetzung und zur Verminderung der Retentionszeit auch mit einem Metall- oder Metalloxidkatalysator zusammengebracht werden können.

DE-A-19 805 202 offenbart ein Verfahren zur Herstellung von Salpetersäure, bei dem zur Vermeidung der Freisetzung von Lachgas die Reaktionsgase stromabwärts des Platinnetzes vor der Kühlung über einen temperaturstabilen Katalysator für die Umwandlung des in den Reaktionsgasen enthaltenen N₂O geführt werden. Der Katalysator wird hierbei einer extremen Wärmebelastung von 800 bis 1000°C, wie sie unmittelbar nach dem Austritt der Reaktionsgase aus dem Katalysatornetz vorherrrscht, ausgesetzt. Als Katalysatoren werden vorzugsweise Edelmetalle oder Keramik eingesetzt.

In DE 198 19 882 A1 wird ebenfalls ein Verfahren zur katalytischen Zersetzung von N₂O beschrieben, bei dem die Reaktionsgase der Ammoniakverbrennung vor Abkühlung, d.h vor Kontakt mit einem Wärmetauscher über einen Katalysator geleitet werden, der vorzugsweise aus 8 Gew.% CuO, 30 Gew.% ZnO und 62 Gew.% Al₂O₃ besteht. Die Verweilzeit zur N₂O-Zersetzung ist vorzugsweise <0,1 sec.

US-A-5,478,549 beansprucht ein Verfahren zur Herstellung von NO durch Oxidation von Ammoniak an Katalysatoren von Platingruppenmetallen, bei dem das unerwünscht entstehende N₂O zusammen mit dem Reaktionsgas zunächst über ein Fängersystem zur Rückgewinnung von flüchtigen Platingruppenmetallen geführt wird, und dann zur Zersetzung des N₂O über ein Katalysatorbett aus Zirkoniumoxid geleitet wird. Die Temperatur des Bettes soll ≥600°C betragen.

Eine Anordnung direkt hinter den Pt-Netzen erscheint deshalb als besonders erstrebenswert, da im Idealfall nur die den Pt-Netzen nachgeschaltete Schüttung von Raschigringen gegen eine entsprechende Katalysatorschüttung ausgetauscht werden müßte. Von Nachteil sind allerdings die extremen Bedingungen. Bei Temperaturen um 900°C, Wassergehalten im Bereich von 17% und NO-Gehalten von 10% werden nicht nur hohe Anforderungen an die Aktivität und Selektivität des Katalysators gestellt, sondern auch an dessen mechanische und thermische Beständigkeit. Ferner kann sich der Pt-Abbrand der Pt-Netze auf der Katalysatorschüttung niederschlagen und zu einer verminderten Selektivität des N₂O-Abbaus führen, in dem auch das gewünschte Oxidationsprodukt NO zersetzt wird (Boudart et al., Journal of Catalysis 39, (1975), 383-394).

Bei einer Anordnung entsprechender Katalysatoren im Restgas, welches den Absorptionsturm mit einer Temperatur von 20-30°C verläßt, ist der Wassergehalt je nach Verfahrensvariante auf ca. 0,2 - 2 % begrenzt, der NO-Gehalt beträgt ca. 1000 ppm. Die maximale Temperatur zum Betrieb des DeN₂O-Katalysators ist durch die jeweilige Eingangstemperatur der Restgasturbine vorgegeben, was die Auswahl geeigneter Katalysatoren drastisch einschränkt.

Unter den zahlreichen Katalysatoren, deren prinzipielle Eignung zur Zersetzung und Reduktion von Lachgas nachgewiesen wurde (Kapteijn et al.; Appl. Cat. B: Environmental 9 (1996), 25-64), sind u.a. Übergangsmetall-beladene Zeolith-Katalysatoren zu nennen (US-A-5, 171, 553), deren potentielle Anwendbarkeit zur N₂O-Minderung bei der Salpetersäureproduktion auch von Kapteijn erwähnt wird.

Im Falle von eisenhaltigen Zeolithen, z.B. Fe-ZSM-5, wird deren Aktivät zum Abbau von N₂O in Gegenwart entsprechender Mengen NO erhöht, was auf eine Reaktion unter Bildung von NO₂ gemäß NO + N₂O ---> N₂ + NO₂ zurückgeführt wird, welche von Fe-ZSM-5 katalysiert wird (Kapteijn et al., Journal of Catalysis 167 (1997), 256-265).

Entsprechend dieser Vorstellung wird auf den möglichen Einsatz dieser Katalysatoren zur Beseitigung von N₂O aus dem Restgas einer Salpetersäureproduktion hingewiesen, welches zu in etwa gleichen Teilen NO und N₂O enthält. Der praktische Einsatz derartiger eisenhaltiger und kupferhaltiger Zeolithe dürfte allerdings problematisch sein, da hier ausdrücklich auf deren Desaktivierung unter hydrothermalen Bedingungen hingewiesen wird. Die hier beschriebenen Zeolithe wurden durch lonenaustausch in wässrigen Lösungen hergestellt und besitzen nach Angaben von Kapteijn eine Aktivitätsreihenfolge Cu > Co > Fe.

Eisenhaltige Zeolithe basierend auf Ferrierit zur Reduktion von N₂O-haltigen Gasen sind auch Gegenstand von WO 99/34901. Die hier eingesetzten Katalysatoren enthalten 80-90% Ferrierit sowie weitere bindende Anteile. Der Wasseranteil der zu reduzierenden Gase liegt im Bereich von 0,5 bis 5 Vol%. Bei einem Vergleich verschiedener Zeolith-Typen wurden mit Zeolithen vom FER (Ferrierit)-Typ beim Abbau von N₂O bei Temperaturen von 375 bis 400°C die besten Ergebnisse erzielt (97% N₂O-Abbau bei 375°C bei einem NO/N₂O-Verhältnis von 1). Ein wesentlich geringerer Abbau wurde bei Verwendung von Zeolithen vom Pentasil (MFI)- oder Mordenit (MOR)-Typ beobachtet. Bei mit Eisen beladenen MFI-Zeolithen konnte unter obigen Bedingungen sogar nur ein maximaler N₂O-Abbau von 62 % erreicht werden.

In dem bekannten Stand der Technik ist bislang keine Vorrichtung beschrieben, die zwischen den Wärmetauschern des Abhitzekessels der NH₃-Verbrennung und dem Absorptionsturm angeordnet ist und bei Temperaturen bis zu 600°C, einem NOx-Gehalt von ca. 10% und einem Wassergehalt von ca. 17% eine ausreichende katalytische Aktivität besitzt.

Derartig große Mengen an Wasserdampf bei relativ niedrigen Temperaturen, verglichen zur Anordnung der Katalysatoren vor den ersten Wärmetauschern des Abhitzekessels, sind für den Einsatz von Katalysatoren besonders problematisch.

So sinkt beispielsweise der Umsatz des N₂O-Abbaus über einem Co-ZSM-5-Katalysator bei 520°C und einem H₂O-Partialdruck von 13,5kPa (entsprechend 5,4%) von ca. 76% (ohne Wasser) auf ca. 16%; für Fe-ZSM-5 wird bei 560°C ein Aktivitätsverlust von ca. 86% auf ca. 40% registriert (Kapteijn et al., Studies in Surface Science and Catalysis 101 (1996), 641-650).

Aufgabe ist es somit, eine Vorrichtung für den Einsatz bei der Salpetersäureproduktion zur Entfernung von N₂O aus den Reaktionsgasen zur Verfügung zu stellen, die eine wirtschaftliche Fahrweise des Prozesses erlaubt, Katalysatoren enthält, die auch unter hydrothermal Reaktionsbedingungen eine ausreichende katalytische Aktivität besitzen und einen hohen N₂O-Abbau garantiert. Vorzugsweise sollte die Anordnung so in den Prozess eingefügt sein, daß die Reaktionsgase sich bei Eintritt in diese Anordnung bereits auf dem entsprechenden Temperaturniveau befinden, so daß eine Aufheizung des Katalysators umgangen werden kann.

Die vorliegende Erfindung löst diese Aufgabe und betrifft eine Vorrichtung zur Beseitigung von N₂O bei der Salpetersäureproduktion, welche hinter einem Wärmetauscher nach der Ammoniakverbrennung und vor dem Absorptionsturm angeordnet ist und einen Katalysator beinhaltet, welcher im wesentlichen einen oder mehrere mit Eisen beladene Zeolithe enthält.

In einer weiteren Ausführungsform betrifft die vorliegende Erfindung ein Verfahren zur Entfernung von N₂O bei der Salpetersäureproduktion durch Überleiten des Reaktionsgases der Ammoniakverbrennung über einen Katalysator, welcher im wesentlichen einen oder mehrere mit Eisen beladene Zeolithe enthält, wobei der Katalysator so angeordnet ist, daß dieser sich hinter einem Wärmetauscher der Ammoniakverbrennung, aber vor dem Eintritt in den Absorptionsturm befindet.

Enthält die Anlage für die Salpetersäureproduktion mehrere Wärmetauscher nach der Ammoniakverbrennung so befindet sich die erfindungsgemäße Vorrichtung im Bereich hinter dem ersten Wärmetauscher und vor dem Eintritt in den Absorptionsturm. In diesem Bereich können auch mehrere erfindungsgemäße Vorrichtungen angeordnet sein. Vorzugsweise befindet sich die Vorrichtung hinter einem Wärmetauscher bei einem Temperaturniveau des Reaktionsgases im Bereich von 350 und 600°C.

Erfindungsgemäß verwendete Katalysatoren enthalten im wesentlichen, vorzugsweise > 50 Gew%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des MFI-, oder MOR-Typs, in dem erfindungsgemäß verwendeten Katalysator enthalten sein. Darüberhinaus kann der erfindungsgemäß verwendete Katalysator weitere dem Fachmann bekannte Zusatzstoffe, wie z.B. Bindemittel enthalten. Vorzugsweise wird in die Zeolithe durch einen Festkörper-Ionenaustausch Eisen eingebracht. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appln. Catal. 184, (1999) 249-256; EP-A-0 955 080). Auf diese Literaturstellen wird hiermit ausdrücklich Bezug genommen. Die erhaltenen Katalysatorpulver werden anschließend in einem Kammerofen an der Luft bei Temperaturen im Bereich von 400 bis 600 °C kalziniert. Nach dem Kalzinieren werden die mit Eisen beladenen Zeolithe in destilliertem Wasser intensiv gewaschen und nach Abfiltrieren des Zeoliths getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilicate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10%. Insbesondere eignen sich hier Zeolithe vom Typ MFI, BETA, FER, MOR und/oder MEL. Genaue Angaben zum Aufbau oder Struktur dieser Zeolithe werden im Atlas of Zeolithe Structure Types, Elsevier, 4^{th} revised Edition 1996, gegeben, auf den hiermit ausdrücklich Bezug genommen wird. Erfindungsgemäß bevorzugte Zeolithe sind vom MFI (Pentasil)- oder MOR (Mordenit)-Typ. Insbesondere bevorzugt sind Zeolithe vom Fe-ZSM-5 Typ.

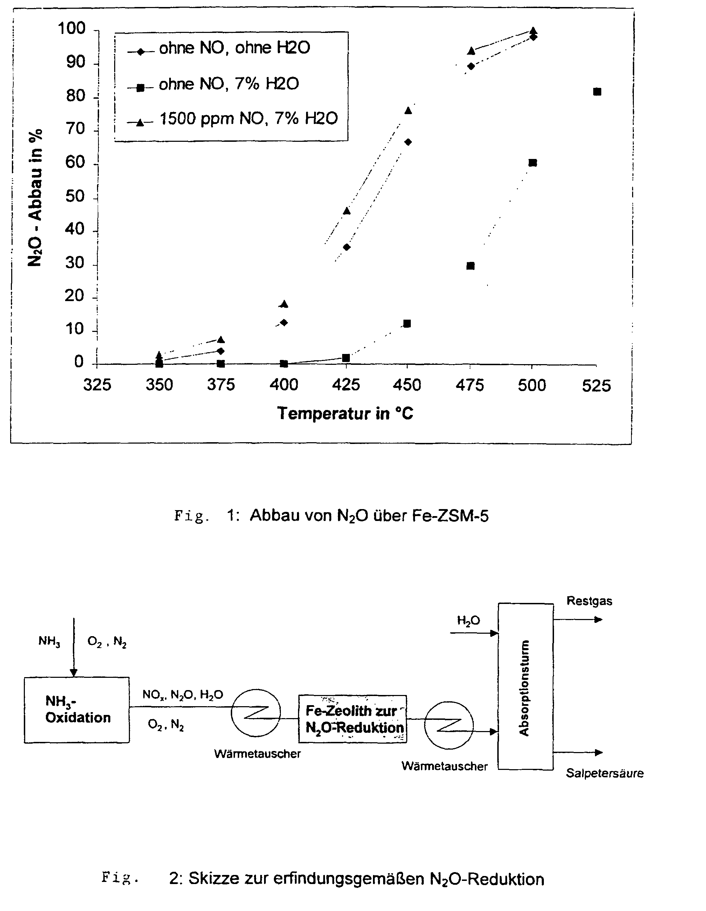

Überraschend wurde nun gefunden, daß der im Stand der Technik beschriebene positive Effekt des NO auf den Abbau von N₂O an eisenhaltigen Katalysatoren gemäß NO + N₂O ---> N₂ + NO₂ auch bei Anwesenheit großer Mengen an Wasserdampf wirksam ist, so daß die in der Literatur beschriebene Desaktivierung derartiger Katalysatoren durch Wasserdampf durch die gleichzeitige Gegenwart von NO an dieser Stelle mehr als kompensiert werden kann. Abbildung 1 illustriert diesen Effekt beim Abbau von 1000 ppm N₂O in Gegenwart von NOx und H₂O. Es wurde gefunden, daß bereits die Gegenwart von 1500 ppm NOx ausreichend ist, einen vollständigen Abbau von 1000 ppm N₂O bei 500°C zu erzielen, auch wenn gleichzeitig 7 Vol.% H₂O im Reaktionsgasstrom anwesend sind (vergleiche auch Beispiel 3). Selbstverständlich bewirkt ein weiterer Überschuß an NOx, wie er üblicherweise im Reaktionsgas der Ammoniakverbrennung bei der Salpetersäureherstellung vorliegt, keine Verschlechterung des NOx-Abbaus, sondern vielmehr eine weitere Erniedrigung der Umsatztemperatur. So wird, wie in den Beispielen 6-8 dargelegt, die desaktivierende Wirkung von 18 Vol.% Wasser durch die Anwesenheit von 10 Vol. % NOₓ bei 450°C Betriebstemperatur nahezu vollständig aufgehoben.

Zur Entfernung des bei der Salpetersäureherstellung anfallenden N₂O wird das Reaktionsgas der Ammoniakverbrennung über die erfindungsgemäße Katalysatoranordnung geleitet, die so angeordnet ist, daß sie sich hinter einem Wärmetauscher nach der Ammoniakverbrennung aber noch vor dem Eintritt in den Absorptionsturm befindet. Das Reaktionsgas besitzt bei Eintritt in die Vorrichtung eine Temperatur < 600°C und weist einen NOₓ-Gehalt (mit x = 1 bis 2) von 3 bis 17 Vol.%, vorzugsweise 6 bis 14 Vol.% auf. Der N₂O-Gehalt des Gases liegt bei Eintritt in die Vorrichtung üblicherweise bei bis zu 3000 ppm. Der Betriebsdruck der Vorrichtung sollte um einen zufriedenstellenden N₂O-Abbau zu erzielen im Bereich von 1 bis 15 bar, vorzugsweise 1 bis 12 bar, liegen.

Das Reaktionsgas wird vorzugsweise mit einer Raumgeschwindigkeit im Bereich von 2.000 bis 200.000 h⁻¹, insbesondere 5.000 bis 50.000 h⁻¹ über den Katalysator geleitet.

Mit dem erfindungsgemäßen Verfahren ist es somit möglich, auch in Gegenwart hoher Wassergehalte bei Temperaturen im Bereich von 350 bis 600°C, insbesondere 400 bis 550°C, und Wassergehalten des Reaktionsgases im Bereich von 5 bis 25 Vol.%, vorzugsweise 10 bis 20 Vol.%, einen Abbau von > 90 %, vorzugsweise > 95%, insbesondere einen 100 prozentigen Abbau des N₂O erreichen.

So liegt der N₂O-Gehalt des Reaktionsgases nach Überleiten über die erfindungsgemäße Vorrichtung üblicherweise im Bereich von 0 bis 100 ppm.

Das gemäß NO + N₂O ---> N₂ + NO₂ gebildete NO₂ wird nach Verlassen der erfindungsgemäßen Anordnung weitergeleitet in den Absorptionsturm und dort direkt zur HNO₃-Erzeugung genutzt.

Durch die erfindungsgemäße Anordnung wird eine zusätzliche Aufheizung des Gasstromes bzw. des Katalysatorbettes vermieden, da sich die Reaktionsgase bei Eintritt in die Vorrichtung bereits auf dem entsprechenden Temperaturniveau befinden.

Die im Stand der Technik beschriebenen Anordnungen arbeiten bei deutlich höheren Temperaturen als 600°C, was durch die desaktivierende Wirkung des H₂O-Gehaltes bedingt ist. Damit einher geht das Problem der gleichzeitigen NO-Zersetzung und der Langzeitstabilität der Katalysatoren. Mit der erfindungsgemäßen Anordnung und dem erfindungsgemäßen Verfahren ist es möglich, einen hohen N₂O-Abbau trotz der hohen Wassergehalte zu erreichen, ohne daß es zu einer nennenswerten Abnahme der Katalysatoraktivität kommt.

Ferner ist aufgrund der niedrigen Betriebstemperatur und der Art des Katalysators ein gleichzeitiger NO-Abbau vernachlässigbar.

Ebenso wird das in dem vorstehend genannten Stand der Technik beschriebene Problem von Pt-Ablagerungen auf dem Katalysator vermieden, da die erfindungsgemäße Anordnung nicht direkt unter den Pt-Netzen angeordnet ist.

Die Erfindung wird anhand der nachfolgenden Beispiele erläutert.

### Beispiele:

### Beispiele 1-8:

Als Katalysator wurde ein mit Eisen beladener Zeolith vom Typ ZSM-5 eingesetzt. Die Herstellung des Fe-ZSM-5-Katalysators erfolgte durch Festkörper-Ionentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A. Tißler, T. Turek: Preparation of highly active Fe-ZSM-5 catalyst through solid state ion exchange for the catalytic decomposition of N₂O. in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpem (2x2mm). Diese fanden Verwendung in den Beispielen 1-5, während in den Beispielen 6-8 ein entsprechendes Granulat mit einer Korngröße von 1-2 mm verwendet wurde.

Die Versuche wurden in einer stationär betriebenen Durchflußapparatur mit online Analytik bei einer Raumgeschwindigkeit von jeweils 10.000 h⁻¹ durchgeführt.

Der Feed enthielt jeweils 1000 ppm N₂O und 2,5% Vol O₂ (Beispiele 1-5) bzw. 5,5 Vol.% O₂ (Beispiele 6-8) in N₂ sowie wechselnde Mengen an H₂O und NOₓ.

Bei Variation der Menge an H₂O und NOx (x = 1 bis 2) wurden folgende Restkonzentrationen an N₂O erhalten:

| Beispiel | H₂O-Konzentration im Feed | NOx -Konzentration im Feed | Resultierende N₂O-Konzentration bei 400°C | Resultierende N₂O-Konzentration bei 450°C | Resultierende N₂O-Konzentration bei 500°C |
|---|---|---|---|---|---|
| 1 | 0 % vol | 0 ppm | 875 ppm | 335 ppm | 21 ppm |
| 2 | 7 % vol | 0 ppm | 995 ppm | 877 ppm | 369 ppm |
| 3 | 7 % vol | 1500 ppm | 816 ppm | 238 ppm | 0 ppm |
| 4 | 0,5 % vol | 0 ppm | 961 ppm | 735 ppm | 165 ppm |
| 5 | 0,5 % vol | 500 ppm | 604 ppm | 125 ppm | 13 ppm |
| 6 | 0 % vol | 0 % vol | 365 ppm | 7 ppm | |
| 7 | 18 % vol | 0 % vol | 915 ppm | 681 ppm | |
| 8 | 18 % vol | 10 % vol | 545 ppm | 20 ppm | |

## Patentansprüche

1. Vorrichtung zur Beseitigung von N₂O bei der Salpetersäureproduktion, **dadurch gekennzeichnet, daß** diese hinter einem Wärmetauscher nach der Ammoniakverbrennung und vor dem Absorptionsturm angeordnet ist und einen Katalysator beinhaltet, der im wesentlichen einen oder mehrere mit Eisen beladene Zeolithe enthält.

2. Vorrichtung nach Anspruch 1, **dadurch gekennzeichnet, daß** diese hinter dem ersten Wärmetauscher des Abhitzekessels der Ammoniakverbrennung und vor dem Absorptionsturm angeordnet ist.

3. Vorrichtung nach Anspruch 1, **dadurch gekennzeichnet, daß** der oder die im Katalysator enthaltenen mit Eisen beladenen Zeolithe vom Typ MFI, BEA, FER, MOR und/oder MEL sind.

4. Vorrichtung nach Anspruch 3, **dadurch gekennzeichnet, daß** der oder die mit Eisen beladene Zeolithe vom Typ MFI sind.

5. Vorrichtung nach Anspruch 3, **dadurch gekennzeichnet, daß** der Zeolith ein Fe-ZSM-5 ist.

6. Verfahren zur Entfernung von N₂O bei der Salpetersäureproduktion durch Überleiten des Reaktionsgases der Ammoniakverbrennung über einen Katalysator, welcher im wesentlichen einen oder mehrere mit Eisen beladene Zeolithe enthält, wobei der Katalysator so angeordnet ist, daß dieser sich hinter einem Wärmetauscher nach der Ammoniakverbrennung aber vor dem Eintritt in den Absorptionsturm befindet.

7. Verfahren nach Anspruch 6, **dadurch gekennzeichnet, daß** das Reaktionsgas, das über den Katalysator geleitet wird, eine Temperatur im Bereich von 350 bis 600°C hat.

8. Verfahren nach Anspruch 6 und/oder 7, **dadurch gekennzeichnet, daß** der NOₓ-Gehalt des Reaktionsgases, das über den Katalysator geleitet wird im Bereich von 3 bis 17 Vol.%, vorzugsweise im Bereich von 6 bis 14 Vol.%, liegt.

9. Verfahren nach mindestens einem der vorhergehenden Ansprüche 6 bis 8, **dadurch gekennzeichnet, daß** der N₂O-Gehalt des Reaktionsgases nach Überleiten über den Katalysator im Bereich von 0 bis 100 ppm liegt.

10. Verfahren nach mindestens einem der vorhergehenden Ansprüche 6 bis 9, **dadurch gekennzeichnet, daß** der H₂O-Gehalt des Reaktionsgases, das über den Katalysator geleitet wird im Bereich von 5 bis 25 Vol.%, vorzugsweise im Bereich von 10 bis 20 Vol.%, liegt.

11. Verfahren nach mindestens einem der vorhergehenden Ansprüche 6 bis 10, **dadurch gekennzeichnet, daß** das Reaktionsgas bei einem Druck im Bereich von 1 bis 15 bar über den Katalysator geleitet wird.

12. Verfahren nach mindestens einem der vorhergehenden Ansprüche 6 bis 11, **dadurch gekennzeichnet, daß** das Reaktionsgas mit einer Raumgeschwindigkeit im Bereich von 2.000 bis 200.000 h⁻¹ über den Katalysator geleitet wird.

13. Verfahren nach mindestens einem der vorhergehenden Ansprüche 6 bis 12, **dadurch gekennzeichnet, daß** ein N₂O-Abbau von > 90 %, insbesondere >95% erreicht wird.

## Claims

1. An apparatus for eliminating N₂O during nitric acid production, **characterised in that** this has been arranged downstream of a heat exchanger after ammonia combustion and upstream of the absorption column, and includes a catalyst which is substantially composed of one or more iron-loaded zeolites.

2. The apparatus as claimed in claim 1, **characterized in that** this has been arranged downstream of the first heat exchanger of the waste heat boiler associated with ammonia combustion and upstream of the absorption column.

3. The apparatus as claimed in claim 1, **characterized in that** the iron-loaded zeolite(s) present in the catalyst are of type MFI, BEA, FER, MOR and/or MEL.

4. The apparatus as claimed in claim 3, **characterized in that** the iron-loaded zeolite(s) are of MFI type.

5. The apparatus as claimed in claim 3, **characterized in that** the zeolite is an Fe-ZSM-5.

6. A process for removing N₂O during nitric acid production, by passing the reaction gas from ammonia combustion over a catalyst which is substantially composed of one or more iron-loaded zeolites, the arrangement of the catalyst being such that its location is downstream of a heat exchanger after ammonia combustion but upstream of entry into the absorption column.

7. The process as claimed in claim 6, wherein the reaction gas passed over the catalyst has a temperature in the range from 350 to 600°C.

8. The process as claimed in claim 6 and/or 7, **characterized in that** the NOₓ content of the reaction gas passed over the catalyst is in the range from 3 to 17% by volume, preferably in the range from 6 to 14% by volume.

9. The process as claimed in at least one of the preceding claims 6 to 8, **characterized in that** the N₂O content of the reaction gas after passage over the catalyst is in the range from 0 to 100 ppm.

10. The process as claimed in at least one of the preceding claims 6 to 9, **characterized in that** the H₂O content of the reaction gas passed over the catalyst is in the range from 5 to 25% by volume, preferably in the range from 10 to 20% by volume.

11. The process as claimed in at least one of the preceding claims 6 to 10, **characterized in that** the reaction gas is passed with a pressure in the range from 1 to 15 bar over the catalyst.

12. The process as claimed in at least one of the preceding claims 6 to 11, **characterized in that** the reaction gas is passed with a space velocity in the range from 2000 to 200,000 h⁻¹ over the catalyst.

13. The process as claimed in at least one of the preceding claims 6 to 12, **characterized in that** the N₂O decomposition achieved is > 90%, in particular >95%.

## Revendications

1. Dispositif pour l'élimination de N₂O dans la production d'acide nitrique, **caractérisé en ce que** celui-ci est placé derrière un échangeur de chaleur après le brûlage de l'ammoniac et avant la tour d'absorption et **en ce qu'**il contient un catalyseur, qui contient essentiellement une ou plusieurs zéolites chargées avec du fer.

2. Dispositif selon la revendication 1, **caractérisé en ce que** celui-ci est disposé derrière le premier échangeur de chaleur de la bouilloire de chauffage du brûlage d'ammoniac et avant la tour d'absorption.

3. Dispositif selon la revendication 1, **caractérisé en ce que** la ou les zéolites chargées avec du fer contenues dans le catalyseur sont du type MFI, BEA, FER, MOR et/ou MEL.

4. Dispositif selon la revendication 3, **caractérisé en ce que** la ou les zéolites chargées avec du fer sont du type MFI.

5. Dispositif selon la revendication 3, **caractérisé en ce que** la zéolite est un Fe-ZSM-5.

6. Procédé d'élimination de N₂O dans la production d'acide nitrique par passage du gaz de réaction du brûlage d'ammoniac sur un catalyseur, qui contient essentiellement une ou plusieurs zéolites chargées avec du fer, dans lequel le catalyseur est placé de manière à se trouver derrière un échangeur de chaleur après la combustion d'ammoniac mais avant l'entrée dans la tour d'absorption.

7. Procédé selon la revendication 6, **caractérisé en ce que** le gaz de réaction, qui est dirigé sur le catalyseur, a une température dans l'intervalle de 350 à 600 °C.

8. Procédé selon la revendication 6 et/ou 7, **caractérisé en ce que** la concentration en NOₓ du gaz de réaction, qui est dirigé sur le catalyseur se situe dans là gamme de 3 à 17 % en vol., de préférence dans la gamme de 6 à 14 % en vol.

9. Procédé selon au moins une des revendications précédentes 6 à 8, **caractérisé en ce que** la concentration en N₂O du gaz de réaction après passage sur le catalyseur se situe dans la gamme de 0 à 100 ppm.

10. Procédé selon au moins une des revendications précédentes 6 à 9, **caractérisé en ce que** la concentration en H₂O du gaz de réaction, qui est dirigé sur le catalyseur se situe dans la gamme de 5 à 25 % en vol., de préférence dans la gamme de 10 à 20 % en vol.

11. Procédé selon au moins une des revendications précédentes 6 à 10, **caractérisé en ce que** le gaz de réaction est dirigé sur le catalyseur à une pression dans la gamme de 1 à 15 bar.

12. Procédé selon au moins une des revendications précédentes 6 à 11, **caractérisé en ce que** le gaz de réaction est dirigé sur le catalyseur avec une vitesse spatiale dans la gamme de 2 000 à 200 000 h⁻¹.

13. Procédé selon au moins une des revendications précédentes 6 à 12, **caractérisé en ce qu'**on atteint une décomposition de N₂O de > 90 %, en particulier de > 95 %.
